# EUROPÄISCHE PATENTANMELDUNG

(11) **EP 1 361 515 A1**
(43) Veröffentlichungstag der Anmeldung: **12.11.2003**
(21) Anmeldenummer: 02010038.4
(22) Anmeldetag: 06.05.2002
(51) Int. Cl.: G06F 11/14, G06F 17/30

(54) **Verfahren und System zur Sicherung einer Datenbank**

(71) Anmelder: SIEMENS AKTIENGESELLSCHAFT, 80333 München (DE)
(72) Erfinder: Geyer, Reinhard, 2272 Niederabsdorf (AT)
(74) Vertreter: Berg, Peter, Dipl.-Ing.

(57) **Zusammenfassung**

Verfahren zum Sichern einer Datenbank bei welchem Daten in einem Arbeitsspeicher (M) gepuffert und auf einem Hintergrundspeicher (D) gesichert werden, so dass im Fehlerfall des Arbeitsspeichers dessen Dateninhalt durch eine Datenrückübertragung wieder herstellbar ist, gekennzeichnet durch die folgenden Schritte:
Bilden eines ersten Voll-Backups durch Speichern des Dateninhalts des Arbeitsspeichers in eine erste Datei (D1) auf dem Hintergrundspeicher (D),
Bilden eines ersten Zuwachs-Backups, durch Speichern von gegenüber einem letzten Zuwachs-Backup veränderten oder hinzugekommenen Daten des Arbeitsspeichers (M) in Form von Blöcken (1.LOG, 2.LOG, ..., n.LOG) in eine zweite Datei (D2) auf dem Hintergrundspeicher (D), wobei die Größe dieser zweiten Datei (D2) so lange anwächst, bis das Speichern an einem Programmhaltepunkt anhält.

## Beschreibung

### Bezeichnung der Erfindung

Die Erfindung betrifft ein Verfahren und ein System zur Sicherung einer Datenbank, bei welchem Daten in einem Arbeitsspeicher gepuffert und auf einem Hintergrundspeicher gesichert werden, so dass im Fehlerfall des Arbeitsspeichers dessen Dateninhalt durch eine Datenrückübertragung wieder herstellbar ist.

### Stand der Technik

Eine Datenbank oder Datenbasis ist ein Programmsystem, das zentral Informationen unterschiedlichster Art verwaltet. In vielen technischen Systemen kommt es darauf an, dass Informationen ohne Zeitverzögerung und ohne Qualitätseinbuße verfügbar sein müssen.

Vermittlungseinrichtungen von Telekommunikationssystemen verwalten in Datenbanken teilnehmerbezogene Informationen, die fortlaufend aktualisiert und gesichert werden müssen. In Mobilfunknetzen überwachen sog. Mobile Switching Center, das sind Vermittlungseinrichtungen die eine Verbindung zu den mobilen Kommunikationsteilnehmern und zu anderen Vermittlungseinrichtungen eines Telekommunikationsnetzes herstellen, die Nachrichtenübermittlung zwischen den mobilen Stationen. Zur Erfüllung dieser Aufgabe sind sie mit einer oder mit mehreren Teilnehmerdatenbasen ausgestattet, in deren Arbeitsspeicher die Einträge laufend aktualisiert werden. In einem sog. Heimatregister wird in einem Verzeichnis alle Daten derjenigen Teilnehmer, die ihren ständigen Aufenthaltsort im Versorgungsbereich dieser Vermittlungsstelle haben, gespeichert. Weiterhin werden in dieser Datenbasis die Informationen über die aktuellen Aufenthaltsorte der mobilen Stationen abgelegt. In einem Besucherregister werden temporär die Daten derjenigen Stationen gespeichert, die sich vorübergehend im Bereich dieser Vermittlungsstelle aufhalten. Da die Daten nur während eines Zeitintervalls im Arbeitsspeicher abgelegt sind, werden diese Daten auch als semipermanent oder auch als halbdauernde Daten bezeichnet. Da jeder Teilnehmer sich im Mobilfunknetz zwischen mehreren Funkversorgungsgebieten bewegen kann, ist es erforderlich, abhängig von seinem aktuellen Aufenthaltsort auch seine teilnehmerindividuellen Daten in einem oder in mehreren Besucherregistern zu registrieren. M.a.W. die Vermittlungseinrichtungen des Telekommunikationssystems müssen sowohl mobilitätsbezogene als auch teilnehmerindividuelle Daten auf einem aktuellen Stand halten. Dies erfolgt durch sogenannte Aktualisierungs-Prozeduren, auch als Location-Update bezeichnet, bei dem die geänderten Daten für einen Kommunikationsteilnehmer in der Datenbasis vermerkt werden. Damit die erfassten Daten bei eventuell auftretenden Software- oder Hardwarefehlern in der Vermittlungseinrichtung nicht verloren gehen, müssen diese auf einem Hintergrundspeicher periodisch gesichert werden.

Eine bekannte Maßnahme zur Sicherung von Daten ist das Erstellen eines sogenannten Backups. Ein Backup ist eine Sicherungskopie einer Datei oder eines gesamten Datenträgers, z.B.: eines Halbleiterarbeitsspeichers. Eine Backup-Datei beinhaltet all jene Informationen, die erforderlich sind, um die ursprüngliche Datenbasis eines Arbeitsspeichers genau in jenem Zustand wiederherzustellen, in dem sich dieser befand, bevor das Backup erstellt wurde. Bei einer Echtzeitdatenbasis, müssen auch jene Informationen gesichert werden, die während des Erstellens der Sicherungskopie geändert werden oder hinzu kommen. Dies erfolgt durch ein Zuwachs-Backup. Ein Zuwachs-Backup enthält die Daten, die gegenüber dem letzten Zuwachs-Backup und während des Erstellens der Sicherungskopie geändert wurden oder hinzugekommen sind. Beim Wiederherstellen der Datenbasis muss dann nicht nur die zuletzt gespeicherte Backup-Version des Arbeitsspeichers, sondern es müssen auch die zuletzt zugelassenen und erfassten Änderungen in den Arbeitsspeicher zurück geladen werden.

Der Arbeitspeicher in Vermittlungsstationen ist ein Halbleiterspeicher, der Hintergrundspeicher hingegen aus Kostengründen ein Plattenspeicher. Die Speicherzugriffszeit auf den Plattenspeicher ist verglichen mit dem Halbleiterspeicher um Größenordnungen langsamer.

Durch die hohe Teilnehmerzahl und die ungehinderte Kommunikationsmöglichkeit innerhalb der Zellen eines Mobilfunknetzes steigen vor allem in Vermittlungsstellen für Mobilfunknetzen die Anforderungen an die Datendurchsatzrate zur Sicherung der Datenbasis. Bei in Betrieb befindlichen Vermittlungsrechnern eines Telekommunikationsnetzes mit mobilen Teilnehmern kann es, aufgrund der langsamen Datensicherung dazu kommen, dass Einträge von Teilnehmern zurückgestellt werden müssen, was je nach Dauer der Verzögerung zu Beeinträchtigungen oder sogar zum Ausfall der angebotenen Kommunikationsdienstleistung führen kann.

### Aufgabe der Erfindung

Aufgabe der vorliegenden Erfindung ist es, ein Verfahren und ein System zur Sicherung einer Datenbasis anzugeben, das eine hohe Datendurchsatzrate aufweist und gleichzeitig wirtschaftlich ist.

### Darstellung der Erfindung

Diese Aufgabe wird erfindungsgemäß bei einem Verfahren der eingangs genannten Art mit den kennzeichnenden Merkmalen von Patentanspruch 1 und bei einem System gemäß den kennzeichnenden Merkmalen des Patentanspruches 8 gelöst.

Das erfindungsgemäße Verfahren ist durch folgende Schritte gekennzeichnet:
Bilden eines ersten Voll-Backups durch Speichern des Dateninhalts des Arbeitsspeichers in eine erste Datei auf dem Hintergrundspeicher;
Bilden eines ersten Zuwachs-Backups, durch Speichern von gegenüber einem letzten Zuwachs-Backup veränderten oder hinzugekommenen Daten des Arbeitsspeichers in Form von Blöcken in eine zweite Datei auf dem Hintergrundspeicher, wobei die Größe dieser zweiten Datei (D2) so lange anwächst, bis das Speichern an einem Programmhaltepunkt anhält.
Die Erfindung sieht also eine Entkoppelung zwischen der Pufferung der Datenänderungen im Arbeitsspeicher und deren Sicherung auf dem Hintergrundspeicher vor. Datenänderungen werden blockweise in einem Zuwachs-Backup auf dem Hintergrundspeicher gesichert.
Indem die Datenbankänderungen in einem zusammenhängenden Stück und nicht direkt an die einzelnen betroffenen Stellen des Backups gespeichert werden, erhöht sich die Datendurchsatzrate bei der Sicherung um das Mehrfache.
Durch die Erfindung ist es möglich, in Betrieb befindliche Vermittlungseinrichtungen für Mobilfunknetze durch einfache Änderungen im Programmablauf an gestiegene Anforderungen anzupassen. Änderungen der Hardware sind nicht erforderlich. Vorhandene Plattenspeicher können beibehalten werden. Es ist nicht erforderlich, das Speichermedium des Hintergrundspeichers durch eine schnelle und kostenaufwendige Speichertechnologie, beispielsweise durch ein RAM-Disk, zu ersetzen.
Es ist von Vorteil, wenn das Programmsystem am Programmhaltepunkt folgende Schritte auslöst:
   Bilden eines zweiten Voll-Backups durch Speichern des Dateninhalts des Arbeitsspeichers in eine dritte Datei auf dem Hintergrundspeicher;
   Bilden eines zweiten Zuwachs-Backups, durch Speichern von veränderten oder hinzugekommenen Daten des Arbeitsspeichers in Form von Blöcken nach dem Programmhaltepunkt in eine vierte Datei auf dem Hintergrundspeicher.

Auf diese Weise entstehen auf dem Hintergrundspeicher zwei Voll-Backup- und zwei Zuwachs-Backup-Dateien. Durch das Bilden dieser Dateien kann an einem einstellbaren Sicherungspunkt ein Zuwachs-Backup geleert und in ein Voll-Backup kopiert werden. Der Dateninhalt auf dem Hintergrundspeicher steht damit ohne Zeitverzögerung und ohne Qualitätseinbußen für eine Rückübertragung zur Verfügung. Durch den Programmhaltepunkt wird die Größe des Zuwachs-Backups auf dem Hintergrundspeicher begrenzt. Dadurch ist sichergestellt, dass im Falle einer Datenrückübertragung der Ladevorgang in den Arbeitsspeicher eine vorgegebene Ladezeit nicht überschreitet.

Mit Vorteil erfolgt das Speichern der Blöcke sequenziell und an gleich beabstandeten Speicherstellen. Indem die Puffer streng hintereinander und in der Reihenfolge wie die Datenbasisänderungen anfallen gesichert werden, erhält man auf dem Hintergrundspeicher eine übersichtliche Organisation der Zuwachs-Datei.

Günstig ist, wenn in einem Dateianfangsbereich eine Information über die Größe enthalten ist.
Insbesondere ist hierbei von Vorteil, wenn in jedem Block in einem Blockanfangsbereich eine Information über die Größe des Blocks und eine virtuelle Adresse, welche den Block einer Speicherstelle im Voll-Backup zuordnet, enthalten sind. Die Gliederung des Speichers in gleich große Teile erleichtert die Organisation und Zuweisung der Speicherbereiche auf dem Hintergrundspeicher. Die virtuelle Adresse erlaubt einen größeren Adressraum als im Arbeitsspeicher tatsächlich vorhanden ist.

Es ist bevorzugt, wenn der Arbeitsspeicher einen ersten Puffer und einen zweiten Puffer umfasst und ein Datenblock aus den Dateninhalt eines dieser Puffer gebildet wird. Durch diese Tandemanordnung des Arbeitsspeichers ist es möglich, dass gleichzeitig Daten in den Arbeitsspeicher gelesen und gleichzeitig Daten auf den Hintergrundspeicher abgelegt werden können.

Bei der Systemaktualisierung einer Teilnehmerdatenbasis ist es besonders günstig, wenn der Programmhaltepunkt dann ausgelöst wird, wenn ein vorgegebener Zeit- oder Speicherschwellwert überschritten wird.

### Kurzbeschreibung der Zeichnungen

Weitere Aufgaben und Vorteile der Erfindung lassen sich am besten unter Bezugnahme auf die folgende Beschreibung in Zusammenhang mit den beiliegenden Zeichnungen verstehen. In den Zeichnungen zeigen:
- Figur 1: eine schematische Darstellung eines bekannten Verfahrens zur Sicherung einer Datenbasis;
- Figur 2: eine schematische Darstellung des erfindungsgemäßen Verfahrens zur Sicherung einer Datenbasis in einem Vermittlungsrechner;
- Figur 3: eine Ausführung der erfindungsgemäßen Datenbanksicherung im Zustand eines Programmhaltepunktes während des Bildens eines zweiten Voll-Backups auf dem Hintergrundspeicher,
- Figur 4: eine Ausführung der erfindungsgemäßen Datenbanksicherung im Zustand eines Programmhaltepunktes während des Bildens eines zweiten Zuwachs-Backups auf dem Hintergrundspeicher,
- Figur 5: einen Aufbau einer erfindungsgemäßen zweiten Datei,
- Figur 6: einen Aufbau eines erfindungsgemäßen Blocks.

### Ausführung der Erfindung

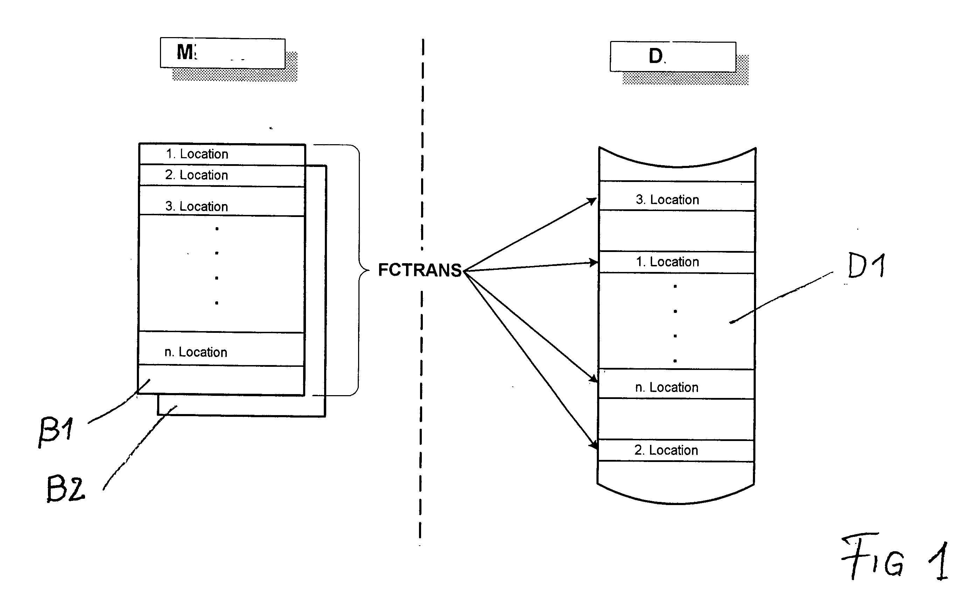

Figur 1 zeigt eine schematische Darstellung eines herkömmlichen Verfahrens zur Sicherung einer Datenbasis. Ein solches Sicherungssystem wird beispielsweise bei Vermittlungsstellen in einem Telekommunikationssystem eingesetzt. Ein Arbeitsspeicher M puffert aktuelle Daten einer Teilnehmerdatenbasis in einer Speicher-Tandem-Anordnung, die aus dem Puffer B1 und dem Puffer B2 besteht. Die strichlierte Linie trennt in der schematischen Darstellung der Figur 1 den Arbeitsspeicher M vom Hintergrundspeicher D. Die Datei D1 beinhaltet eine Kopie der semipermanenten Daten des Arbeitsspeichers, ist also ein Voll-Backup der beiden Puffer B1 und B2. Ein Speicherprogramm FCTRANS überträgt die aktuellen teilnehmerspezifischen Daten der Puffer an die entsprechende Speicherstelle des Hintergrundspeichers. D.h., es wird jeder Dateneintrag getrennt in der Datei D1 gesichert. In der schematischen Darstellung in Figur 1 ist die mit B1 gekennzeichnete Speicherebene mit mehreren Speicherzellen, 1. Location, 2.Location, 3.Location und n. Location gekennzeichnet. Der Inhalt jede dieser einzelnen Speicherzellen wird auf eine bestimmte Speicherstelle auf dem Hintergrundspeicher gespeichert. Dieser Speichervorgang ist durch Pfeile in Figur 1 angedeutet. Der Hintergrundspeicher, der in Vermittlungsstellen üblicherweise ein Plattenspeicher ist, hat verglichen mit einem Halbleiterspeicher eine lange Speicherzugriffszeit. Ein Schreibvorgang dauert mehrere Sekunden, da der Schreib-/Lesekopf des Magnetplattenspeichers jeweils an eine bestimmte Stelle der Magnetplatte zu positionieren ist. Das Herstellen einer Sicherungsdatei ist sehr zeitaufwendig. Da in der Teilnehmerdatenbasis jede Datenbankänderung von einem mobilen Kommunikationsteilnehmer herrührt, beschränkt die vergleichsweise lange Zugriffszeit des Hintergrundspeichers die maximal mögliche Änderungsrate beim Protokollieren. Bei Spitzenauslastung des Kommunikationsnetzes kann es vorkommen, dass das Lesen von Daten vom Puffer auf den Hintergrundspeicher so langsam ist, dass der andere Puffer überläuft bevor dar erste Puffer vollständig auf dem Hintergrundspeicher abgelegt ist. Eine Folge davon ist, dass die Aktualisierung der Teilnehmerdatenbasis verzögert wird. In einem Mobilfunksystem heißt das, dass die Kommunikationsmöglichkeiten der mobilen Teilnehmer nicht nur beeinträchtigt ist, sondern es kann sogar vorkommen, dass Daten verloren gehen und Kommunikationsmöglichkeiten vollständig entfallen.

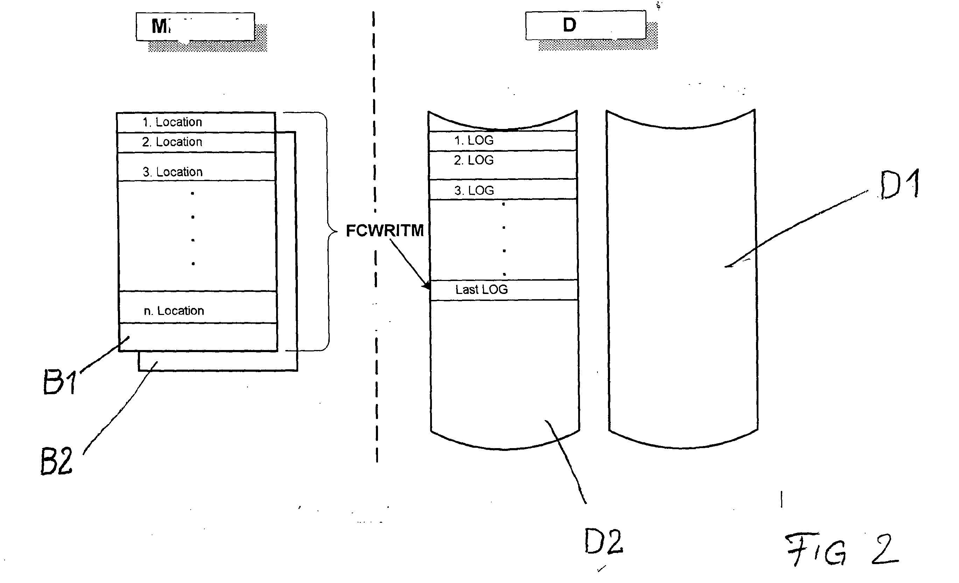

Figur 2 zeigt eine schematische Darstellung des erfindungsgemäßen Verfahrens zur Sicherung einer Datenbasis. Eingehende Daten werden, wie unter Figur 1 erläutert, in einem ersten Puffer B1 und in einem zweiten Puffer B2 des Arbeitspeichers M gepuffert. Zur Sicherung dieser semipermanenten Daten sieht die Erfindung vor, dass diese Einträge nicht separat, sondern blockweise in eine eigene Datei, die zweite D2, auf dem Hintergrundspeicher D gespeichert werden. Dies ist durch einen Pfeil in Figur 2 angedeutet. Die zweite Datei D2 bildet ein Zuwachs-Backup, d.h. eine Logdatei mit fortlaufend protokollierten Änderungen des Arbeitsspeichers. Für eine Rekonstruktion der Daten des Arbeitsspeichers M ist es erforderlich, sowohl die Daten der Voll-Backup-Datei D1 als auch die der Zuwachs-Backup-Datei D2 in den Arbeitsspeicher zu laden. Beide Dateien zusammen bilden den Inhalt des zuletzt gültigen und konsistenten Informationsgehalts des Arbeitsspeichers. In Figur 2 ist der Speichervorgang durch das Programm FCWRITM dargestellt. Dieses Programm fasst geänderte oder hinzugekommene Daten des Arbeitsspeichers zu Blöcken, sogenannten LOG's zusammen und sichert diese blockweise in der zweiten Datei D2. Unter der Bezeichnung LOG ist ein zusammenhängender Bereich von Datenbasisänderungen zu verstehen, die in einem Stück auf den Hintergrundspeicher D in ein Zuwachs-Backup, eine Protokolloder Logdatei, geschrieben werden. Das Speichern dieser zusammenhängenden Bereiche dauert bei einem Plattenspeicher nur Bruchteile einer Sekunde, wodurch das Sichern einer Teilnehmerdatenbasis effizienter erfolgen kann. Jeder Block umfasst den Dateninhalt eines Puffers B1 oder B2. In Figur 2 sind die übertragenen und in der zweiten Datei D2 abgelegten Blöcke durch 1.LOG, 2.LOG, 3.LOG und last LOG gekennzeichnet. Die Datei D2 beinhaltet diese "LOG's" seit dem letzten Prüfpunkt. Da nicht jeder Eintrag einzeln, sondern jeweils ein volles Puffer blockweise auf den Hintergrundspeicher übertragen wird, erreicht man eine Entkopplung zwischen der Aktualisierung der Back-Up-Datei auf dem Hintergrundspeicher und dem Erfassen aktueller Datenbankeinträge der Kommunikationsteilnehmer im Arbeitspeicher.

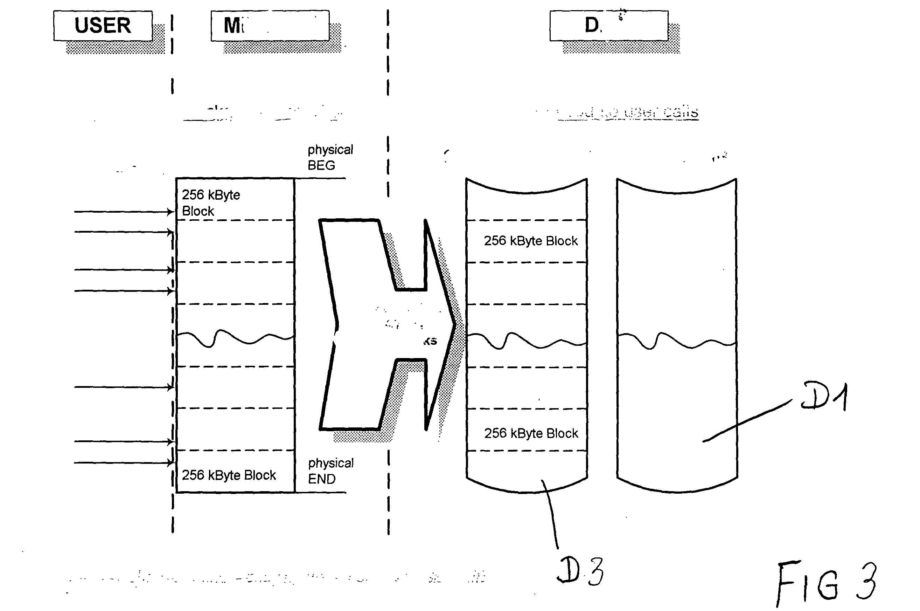

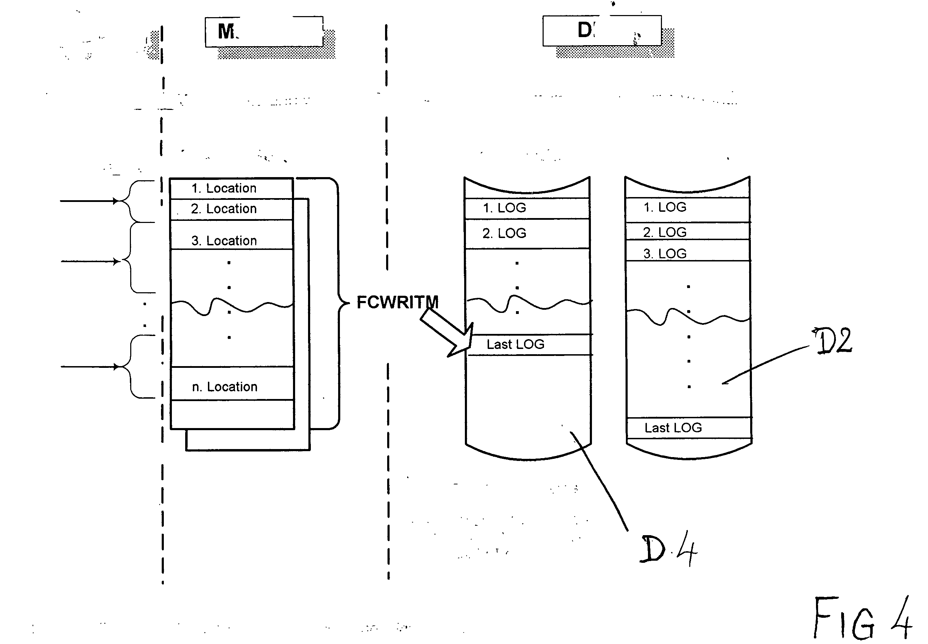

Figur 3 und Figur 4 zeigen eine bevorzugte Ausführung der erfindungsgemäßen Datenbanksicherung im Zustand nach dem Programmhaltepunkt während des Bildens des zweiten Voll-Backups D3 und des zweiten Zuwachs-Backups D4. Zu jedem Zeitpunkt ist auf dem Hintergrundspeicher jeweils ein Vollund ein Zuwachs-Backup existent. Am Programmhaltepunkt wird die vierte Datei D4, geöffnet und von diesem Zeitpunkt an die Puffer B1 und B2 in der Datei D4 gesichert. Gleichzeitig mit dem Schreiben auf D4 wird die dritte Datei D3, d.h. das zweite Voll-Backup, durch eine 1:1 Kopie des Arbeitsspeichers auf den Hintergrundspeicher gebildet. Der Arbeitsspeicher wird dabei in 256 kByte Blöcken, zwischen einer Anfangs- und einer Endadresse, in Figur 3 als "physical BEG" und "physical END" bezeichnet, übertragen. Die Dateien D1, D2 und D4 bilden nun den letzten konsistenten Dateninhalt des Arbeitsspeichers auf dem Hintergrundspeicher ab.

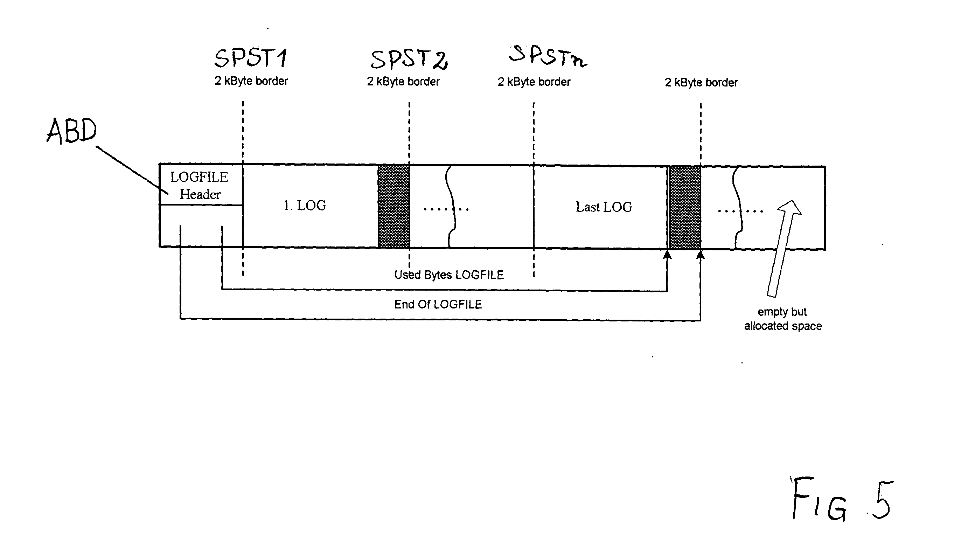

Die Figur 5 zeigt schematisch den Aufbau der zweiten Datei D2. Ein Anfangsbereich ABD der Datei enthält Informationen über die Dateilänge und die benutzten Bytes, in Figur 5 · als "End of LOGFILE" und als "Used Bytes LOGFILE" bezeichnet. Die einzelnen LOG's sind in äquidistanten Speicherstellen SPST1, SPST2 bis SPSTn angeordnet.

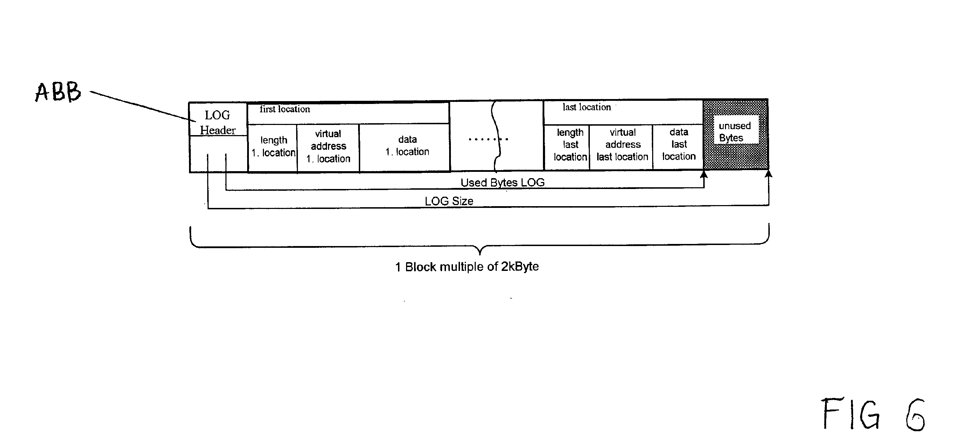

Der Aufbau eines Blocks bei der Bildung des ersten Zuwachs-Backups D2 und des zweiten Zuwachs-Backups D4 ist schematisch in Figur 6 dargestellt. In einem Anfangsbereich ABB sind Informationen über die Größe und die benutzten Bytes, in Figur 6 als "LOG Size" und als "Used Bytes LOG" bezeichnet, enthalten. In Figur 6 dargestellt ist die 1.Location und die last Location, wobei jede Location Angaben über "length", "virtual address" und "data" enthält.

### Bezugszeichenliste:

- B1: erster Puffer des Arbeitsspeichers
- B2: zweiter Puffer des Arbeitsspeichers
- D1: erste Datei des Hintergrundspeichers
- D2: zweite Datei des Hintergrundspeichers
- D3: dritte Datei des Hintergrundspeichers
- D4: vierte Datei des Hintergrundspeichers
- M: Arbeitsspeicher
- D: Hintergrundspeicher
- Location: Speicherstelle
- LOG: Datenblöcke
- FCWRITE: Speicherprogramm
- SPST: Speicherstellen
- ABD: Dateianfangsbereich
- ABB: Blockanfangsbereich

## Patentansprüche

1. Verfahren zum Sichern einer Datenbank bei welchem Daten in einem Arbeitsspeicher (M) gepuffert und auf einem Hintergrundspeicher (D) gesichert werden, so dass im Fehlerfall des Arbeitsspeichers dessen Dateninhalt durch eine Datenrückübertragung wieder herstellbar ist, **gekennzeichnet durch** die folgenden Schritte:
• Bilden eines ersten Voll-Backups **durch** Speichern des Dateninhalts des Arbeitsspeichers in eine erste Datei (D1) auf dem Hintergrundspeicher (D),
• Bilden eines ersten Zuwachs-Backups, **durch** Speichern von gegenüber einem letzten Zuwachs-Backup veränderten oder hinzugekommenen Daten des Arbeitsspeichers (M) in Form von Blöcken (1.LOG, 2.LOG, ..., n.LOG) in eine zweite Datei (D2) auf dem Hintergrundspeicher (D), wobei die Größe dieser zweiten Datei (D2) so lange anwächst, bis das Speichern an einem Programmhaltepunkt anhält.

2. Verfahren nach Anspruch 1, **dadurch gekennzeichnet, dass** am Programmhaltepunkt folgende Schritte ausgelöst werden:
• Bilden eines zweiten Voll-Backups durch Speichern des Dateninhalts des Arbeitsspeichers in eine dritte Datei (D3) auf dem Hintergrundspeicher (D),
• Bilden eines zweiten Zuwachs-Backups, durch Speichern von veränderten oder hinzugekommenen Daten des Arbeitsspeichers (M) in Form von Blöcken (1.LOG, 2.LOG, ..., n.LOG) nach dem Programmhaltepunkt in eine vierte Datei (D4) auf dem Hintergrundspeicher (D).

3. Verfahren nach einem der vorstehenden Ansprüche, **dadurch gekennzeichnet, dass** das Speichern der Blöcke (1.LOG, 2.LOG, ..., n.LOG) sequenziell an gleich beabstandete Speicherstellen (SPST1, SPST2, ... , SPSTn) des Hintergrundspeichers D erfolgt.

4. Verfahren nach einem der vorstehenden Ansprüche, **dadurch gekennzeichnet, dass** die zweite Datei (D2) und die vierte Datei (D4) in einem Dateianfangsbereich (ABD) jeweils eine Information über die jeweilige Größe des Zuwachs-Backups enthalten ist.

5. Verfahren nach einem der vorstehenden Ansprüche, **dadurch gekennzeichnet, dass** in jedem Block (1.LOG, 2.LOG, ..., n.LOG) in einem Blockanfangsbereich (ABB) eine Informationen über die Größe des Blocks und eine virtuelle Adresse, welche den Block einer Speicherstelle im Voll-Backup zuordnet, enthalten sind.

6. Verfahren nach einem der vorstehenden Ansprüche, **dadurch gekennzeichnet, dass** der Arbeitsspeicher einen ersten Puffer (B1) und einen zweiten Puffer (B2) umfasst und ein Datenblock (LOG) aus dem Dateninhalt eines dieser Puffer (B1, B2) gebildet wird.

7. Verfahren nach einem der vorstehenden Ansprüche, **dadurch gekennzeichnet, dass** der Programmhaltepunkt durch Überschreiten eines vorgegebenen Zeit- oder Speicherschwellwertes erzeugt wird.

8. System mit einer Datenbasis, insbesondere ein Telekommunikationssystem mit einer Teilnehmerdatenbasis, **dadurch gekennzeichnet, dass** die Systemaktualisierung der Datenbasis bzw. der Teilnehmerdatenbasis nach einem Verfahren gemäß einem der voranstehenden Patentansprüche durchgeführt wird.
